# EUROPEAN PATENT APPLICATION

(11) **EP 3 432 195 A1**
(43) Date of publication of application: **23.01.2019**
(21) Application number: 17895726.2
(22) Date of filing: 10.02.2017
(51) Int. Cl.: G06K 9/00

(54) **BIOSENSOR**

(71) Applicant: Shenzhen Goodix Technology Co., Ltd., Shenzhen, Guangdong 518045 (CN)
(72) Inventor: GUO, Yiping, Shenzhen, Guangdong 518045 (CN); LI, Shaojia, Shenzhen, Guangdong 518045 (CN)
(74) Representative: Fabiano, Piero
(86) International application number: PCT/CN2017/073255
(87) International publication number: WO 2018/145305

(57) **Abstract**

Some embodiments of the present disclosure provide a biometric sensor. The biometric sensor includes a sensor body and a cover disposed on the sensor body; an inner surface of the cover faces a sensing surface of the sensor body; and an outer surface of the cover is formed with a micro-nanostructure.

## Description

### TECHNICAL FIELD

This disclosure relates to sensor technologies, and particularly, to a biosensor.

### BACKGROUND

With the development of a biological identification sensor, especially the rapid development of a fingerprint identification sensor, the application of the fingerprint identification sensor by consumers is more and more frequent and common, and thus, demands on an appearance effect and a fingerprint identification rate when the fingerprint identification sensor is used in different environments are also higher and higher.

In the process of making an invention of the present invention, the inventor(s) find that the existing technology at least has the problem that: currently, by coating a high-transmittance anti-fingerprint film on a cover of the fingerprint identification sensor, residual sweat, grease, water stains and the like are avoided during use, so as to improve the fingerprint identification rate of the fingerprint identification sensor and meanwhile keep the overall appearance effect of glass under the irradiation of light. However, the high-transmittance anti-fingerprint film is generally thin, has limited wear-resistant times, and after being used for a long time, can be gradually worn out and lose effects of promoting the fingerprint identification rate and keeping the appearance effect.

### SUMMARY

Some embodiments of the present disclosure are to provide a biosensor which can prevent the biosensor from being affected by dirt on a cover in the identification process by a micro-nanostructure formed on an outer surface of the cover, so as to improve an identification rate of the biosensor and meanwhile keep an overall appearance effect of the biosensor under irradiation of light.

One embodiment of the present invention provides a biosensor, including: a sensor body and a cover disposed on the sensor body; an inner surface of the cover faces a sensing surface of the sensor body; and an outer surface of the cover is formed with a micro-nanostructure.

Compared to the existing technology, in the embodiment of this disclosure, by using the micro-nanostructure formed on the outer surface of the cover, a fingerprint sensor is prevented from being affected by dirt on the cover in the fingerprint identification process, so as to improve the fingerprint identification rate of the fingerprint identification sensor and meanwhile keep the overall appearance effect of glass under the irradiation of light.

In addition, the biosensor further includes a hydro-oleophobic layer; and the hydro-oleophobic layer is disposed on the micro-nanostructure. In the embodiment, the hydro-oleophobic layer is disposed on the micro-nanostructure, so that two layers of anti-dirt barriers are disposed and wear-resistant times are increased; and moreover, by the micro-nanostructure, the hydro-oleophobic layer can be better combined with the cover.

In addition, the micro-nanostructure is formed by a sand blasting process, an etching process or a transfer printing process. The embodiment provides various preparation processes for the micro-nanostructure, so as to meet actual design demands and meanwhile facilitate flexible selection.

In addition, the micro-nanostructure includes at least one of a leaf-shaped composite structure and a spherical composite structure. This embodiment provides two types of specific micro-nanostructures, which facilitates selection of the micro-nanostructure with a better effect according to actual situations.

In addition, a thickness of the micro-nanostructure ranges from 1 nanometer to 100 microns.

In addition, a thickness of the hydro-oleophobic layer ranges from 1 nanometer to 100 microns.

In addition, a thickness of the cover ranges from 50 microns to 2,000 microns.

In addition, the sensor body is a fingerprint identification chip, and the cover is fixed to the fingerprint identification chip.

In addition, the biosensor further includes a circuit board and a metal ring; the fingerprint identification chip is installed on the circuit board, and the cover is fixed to the fingerprint identification chip; the metal ring is fixed to the circuit board and surrounds the fingerprint identification chip. In this embodiment, a specific implementation mode of the biosensor is provided.

In addition, the hydro-oleophobic layer is an anti-fingerprint protective film.

### BRIEF DESCRIPTION OF THE DRAWINGS

One or more embodiments are exemplarily illustrated by figures in the corresponding accompanying drawings, those exemplary illustrations do not constitute a limitation to the embodiments, elements with the same reference numbers in the accompanying drawings represent similar elements, and unless specified otherwise, the figures in the accompanying drawings do not constitute a limitation to proportion.
Figure 1 is a structural schematic diagram of a biosensor according to a first embodiment of this disclosure;
Figure 2a is a schematic diagram when a micro-nanostructure is a leaf-shaped composite structure according to the first embodiment of this disclosure;
Figure 2b is a schematic diagram when a micro-nanostructure is a spherical composite structure according to the first embodiment of this disclosure;
Figure 3a is a schematic diagram of diffuse reflection of the micro-nanostructure according to the first embodiment of this disclosure;
Figure 3b is a schematic diagram of contact of the micro-nanostructure and a liquid drop according to the first embodiment of this disclosure; and
Figure 4 is a structural schematic diagram of a biosensor according to a second embodiment of this disclosure.

### DETAILED DESCRIPTION

In order to make objects, technical solutions and advantages of the present invention more apparent, some embodiments of the present invention will be further illustrated in detail in connection with the accompanying drawings and the embodiments. It should be understood that specific embodiments described herein merely are used for explaining the present invention, and not intended to define the invention.

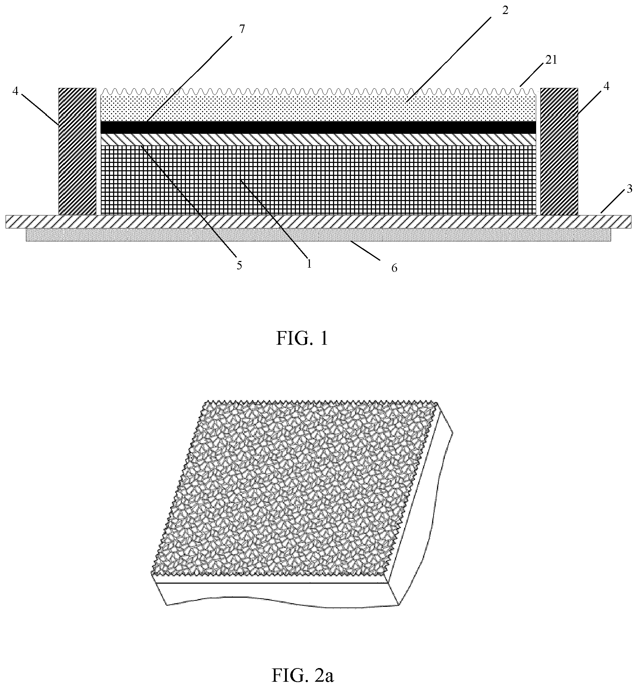

A first embodiment of this disclosure relates to a biosensor, applied to an electronic device, such as a mobile phone, a notebook computer and the like. As shown in Figure 1, the biosensor includes a sensor body 1 and a cover 2 for the sensor body.

In the embodiment, with reference to Figure 1, the cover 2 is disposed on the sensor body 1, and an inner surface of the cover 2 faces a sensing surface of the sensor body 1; and a micro-nanostructure 21 is formed on an outer surface of the cover 2. In the detection process of the biosensor, a living body (for example, a finger) directly touches the micro-nanostructure 21 on the outer surface of the cover 2, and the sensing surface of the sensor body 1 detects touch of the living body through the cover 2 and generates a detection signal. Namely, the outer surface of the cover 2 is a portion of the biosensor, which is directly used to come into contact with the living body (for example, the finger), and thus, the cover 2 is often easy to be in contact with liquid, such as residual sweat, grease, water stains and the like.

The cover 2 may be made of a non-conductive material with a certain thickness, a certain strength and a certain dielectric constant, and its thickness ranges from 50 microns to 2,000 microns, e.g., 50 microns, 1,025 microns and 2,000 microns, and the material may be glass, zirconia ceramic, sapphire, an optical resin film and the like, but is not limited thereto.

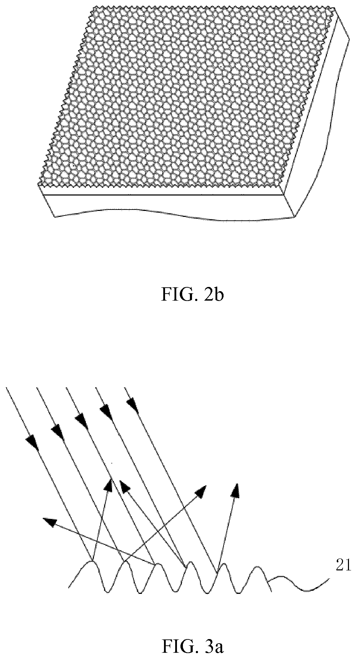

The micro-nanostructure 21 may be a dense micro-nano composite structure with a certain roughness, and its thickness ranges from 1 nanometer to 100 microns, e.g., 1 nanometer, 1 micron and 100 microns. With reference to Figures 2a and 2b, the micro-nanostructure 21 may be a leaf-shaped composite structure or a spherical composite structure, but is not limited thereto. In other embodiments, the micro-nanostructure 21 may also be one of other structures, e.g., a diamond composite structure. The micro-nanostructure 21 may also be a combination of two or more structures. For example, the micro-nanostructure 21 is a combination of the leaf-shaped composite structure and the spherical composite structure; however, the embodiment does not limit it.

The micro-nanostructure 21 is characterized in that a pattern is formed on the surface of the cover 2 by physical or chemical method, and may be formed by a sand blasting process, an etching process or a transfer printing process, but is not limited thereto. Three preparation processes will be introduced specifically as below.

The sand blasting process is that: abrasives are jetted to ae surface of the cover 2 at a high speed by utilizing compressed air (a pressure is controllable), to change the surface of the cover 2, and a deformation range of the cover 2 is just several nanometers to dozens of microns, so that a micro-texture pattern with a certain roughness and different depths may be formed on the surface of the cover 2. The abrasive may be selected from sand materials with different appearance, which contain grit, shot and the like, e.g., steel grit, aluminium oxide, silicon carbide, resin sand and the like, and a particle size of the abrasives may be selected in a range of dozens of microns to hundreds of microns according to a final formation effect. The sand blasting process is applicable to the cover 2 using a material, such as the glass, the zirconia ceramic, the sapphire and the like, as a base material.

The transfer printing process is that: firstly a pattern effect of the micro-nanostructure 21 is made in a mould and then is silk-printed with an ultraviolet curing adhesive, and after lamination with the cover 2, demoulding after ultraviolet curing is finally completed, so that the pattern of the micro-nanostructure 21 made of an adhesive material is transferred to the surface of the cover 2. The transfer printing process is applicable to the cover 2 using a material, such as the optical resin film and the like, as a base material.

The etching process may be a dry etching process or a wet etching process. Firstly, a sized pattern of the micro-nanostructure 21 is formed on a mask, and after exposure and development are carried out by photoresist, the pattern is transferred onto the cover 2 by etching a surface material of the cover 2. Demoulding may also be carried out after etching is carried out by a silk screen method, so as to form a pattern on the cover. After the cover 2 is etched, different patterns with different depths can be obtained, and the etching process is applicable to the cover 2 using a material, such as the glass, the optical resin film and the like, as a base material.

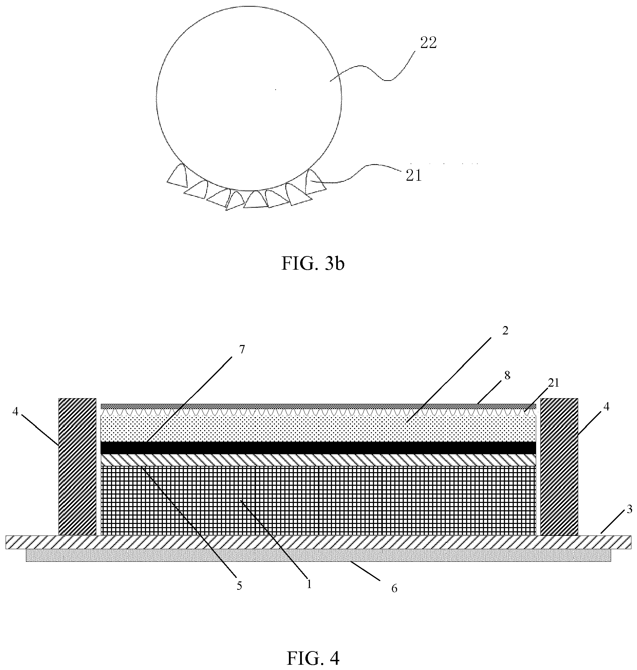

In the embodiment, by the above-mentioned preparation processes, the micro-nanostructure 21 can be formed on the outer surface of the cover 2. With reference to Figure 3a, the micro-nanostructure 21 may enable light irradiated on the surface of the cover to form diffuse reflection so as to reduce excessively bright local reflection caused by local residual substances, reach an effect of eliminating fingerprint marks generated due to water stains, grease and sweat and keep the overall appearance effect under the irradiation of the light. Moreover, with reference to Figure 3b, the micro-nanostructure 21 increases a contact angle of the cover 2 and other liquid substances (for example, a liquid drop, which is marked as 22 in the drawing) to a certain degree, so as to increase hydrophobic and oleophobic effects of the surface of the cover 2, thereby improving a fingerprint identification rate of a fingerprint identification sensor.

In the embodiment, with reference to Figure 1, the sensor body 1 may be a fingerprint identification chip, and the cover 2 is fixed to the fingerprint identification chip. The biological identification sensor further includes a circuit board 3, a metal ring 4 and an adhesive layer 5; the fingerprint identification chip is installed on the circuit board 3, and the cover 2 is fixed to the fingerprint identification chip via the adhesive layer 5.

The metal ring 4 is fixed to the circuit board 3 and surrounds the fingerprint identification chip, the metal ring 4 needs to be grounded, and the metal ring 4 may be slightly protruded out of the cover 2, so as to play a supporting role and protect the cover 2. The metal ring may be fixed to the circuit board 3 via an adhesive, which is not limited in the embodiment and is selected according to actual situations.

It should be noted that when the circuit board 3 is a flexible printed circuit (FPC) board, the biosensor further includes a stiffening plate 6, and the stiffening plate 6 is fixed on a lower surface of the circuit board 3 so as to stiffen structural hardness of the circuit board 3.

Preferably, the biosensor may further include an ink layer 7 which is covered on the inner surface of the cover 2, and the cover 2 is fixed to the sensor body 1 via the adhesive layer 5 disposed between the ink layer 7 and the sensor body 1. The ink layer 7 is used for shielding the sensor body 1, and different colors may be selected so as to generate different appearance effects.

Compared to the existing technology, in the embodiment of this disclosure, by the micro-nanostructure formed on the outer surface of the cover, the fingerprint sensor is prevented from being affected dirt on the cover in the fingerprint identification process, so as to improve the fingerprint identification rate of the fingerprint identification sensor and meanwhile keep the overall appearance effect of the biosensor under the irradiation of the light.

A second embodiment of this disclosure relates to a biosensor. The embodiment is an improvement on the basis of the first embodiment, and the main improvement is that: a hydro-oleophobic layer 8 is disposed on the micro-nanostructure 21.

In the embodiment, with reference to Figure 4, the biosensor further includes the hydro-oleophobic layer 8, and the hydro-oleophobic layer 8 is disposed on the micro-nanostructure 21.

In the embodiment, the hydro-oleophobic layer 8 may be an anti-fingerprint protective film, and its thickness ranges from 1 nanometer to 100 microns, e.g., 1 nanometer, 1 micron and 100 microns. There are various types of the anti-fingerprint protective films, and preferably, the anti-fingerprint protective film is a high-transmittance anti-fingerprint film, and its thickness generally ranges from 10 nanometers to 20 nanometers, e.g., 10 nanometers, 15 nanometers and 20 nanometers.

Compared to the first embodiment, in the embodiment, the hydro-oleophobic layer is disposed on the micro-nanostructure, so that two layers of anti-dirt barriers are disposed and wear-resistant times are increased; moreover, by the micro-nanostructure, the hydro-oleophobic layer may be combined with the cover better.

Those skilled in the art can understand that each of the above-mentioned embodiments is the specific embodiment for implementing the present invention, but in the practical application, various changes can be made to the embodiments in form and in detail, without departure from the spirit and scope of this disclosure.

## Claims

1. A biosensor comprising: a sensor body and a cover disposed on the sensor body; wherein
an inner surface of the cover faces a sensing surface of the sensor body; and
an outer surface of the cover is formed with a micro-nanostructure.

2. The biosensor according to claim 1, wherein, the biosensor further comprises a hydro-oleophobic layer;
the hydro-oleophobic layer is disposed on the micro-nanostructure.

3. The biosensor according to claim 1, wherein, the micro-nanostructure is formed by a sand blasting process, an etching process or a transfer printing process.

4. The biosensor according to claim 1, wherein, the micro-nanostructure comprises at least one of a leaf-shaped composite structure and a spherical composite structure.

5. The biosensor according to claim 1, wherein, a thickness of the micro-nanostructure ranges from 1 nanometer to 100 microns.

6. The biosensor according to claim 2, wherein, a thickness of the hydro-oleophobic layer ranges from 1 nanometer to 100 microns.

7. The biosensor according to claim 1, wherein, a thickness of the cover ranges from 50 microns to 2,000 microns.

8. The biosensor according to claim 1, wherein, the sensor body is a fingerprint identification chip, and the cover is fixed to the fingerprint identification chip.

9. The biosensor according to claim 8, the biosensor further comprises a circuit board and a metal ring;
the fingerprint identification chip is installed on the circuit board, and the cover is fixed to the fingerprint identification chip; and
the metal ring is fixed to the circuit board and surrounds the fingerprint identification chip.

10. The biosensor according to claim 2, wherein, the hydro-oleophobic layer is an anti-fingerprint protective film.
